(19) Europäisches Patentamt
European Patent Office
Office européen des brevets

(11) EP 2 731 452 B1

(12) EUROPEAN PATENT SPECIFICATION

(45) Date of publication and mention
of the grant of the patent:
**12.08.2015 Bulletin 2015/33**

(21) Application number: **12730481.4**

(22) Date of filing: **22.06.2012**

(51) Int Cl.:
*A23L 1/0532* (2006.01)        *A23G 9/38* (2006.01)
*A23G 9/48* (2006.01)          *A23G 9/44* (2006.01)

(86) International application number:
**PCT/EP2012/062064**

(87) International publication number:
**WO 2013/007493 (17.01.2013 Gazette 2013/03)**

(54) **FROZEN CONFECTION WITH GEL COATING**

GEFRORENES KONFEKT MIT GELBESCHICHTUNG

CONFISERIE GLACÉE ENROBÉE DE GEL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.07.2011 EP 11173395**

(43) Date of publication of application:
**21.05.2014 Bulletin 2014/21**

(73) Proprietors:
• **Unilever PLC**
  **London EC4Y 0DY (GB)**
  Designated Contracting States:
  **CY GB IE MT**
• **Unilever N.V.**
  **3013 AL Rotterdam (NL)**
  Designated Contracting States:
  **AL AT BE BG CH CZ DE DK EE ES FI FR GR HR
  HU IS IT LI LT LU LV MC MK NL NO PL PT RO RS
  SE SI SK SM TR**

(72) Inventors:
• **BRAMLEY, Allan, Sidney**
  **Bedford**
  **Bedfordshire MK44 1LQ (GB)**
• **MAYES, Sarah, Jane**
  **Bedford**
  **Bedfordshire MK44 1LQ (GB)**

(74) Representative: **Keenan, Robert Daniel**
  **Unilever PLC**
  **Unilever Patent Group**
  **Colworth House**
  **Sharnbrook**
  **Bedford**
  **Bedfordshire MK44 1LQ (GB)**

(56) References cited:
**US-A1- 2011 151 064     US-B1- 6 379 724
US-B1- 6 447 829        US-B1- 6 548 097
US-B2- 6 645 538**

• **DATABASE GNPD [Online] MINTEL; July 2008
(2008-07), "Peel-a-Pop Ice Pop", XP002684430,
Database accession no. 928494**
• **CLARKE C J ET AL: "ICE STRUCTURING
PROTEINS - A NEW NAME FOR ANTIFREEZE
PROTEINS", CRYO LETTERS,, vol. 23, no. 2, 1
March 2002 (2002-03-01), pages 89-92,
XP009030968, ISSN: 0143-2044**

## Description

### Technical field of the invention

The present invention relates to a frozen confectionery product. In particular, it relates to a frozen confectionery product at least partially coated with a gel.

### Background to the invention

Consumers (especially children) are always looking for frozen confectionery products which provide interesting eating experiences. Products consisting of a core of frozen confection with a jelly-like coating have been known for some years, for example as described in WO 01/30175 and US 3 752 678. CN 101120714A discloses a variation on this in which the jelly coating can be peeled off the frozen confection core, in a manner similar to that of peeling the skin off a piece of fruit. However, it can be difficult to peel the jelly coating away from the frozen confection core without part of the coating sticking to the core and / or the coating breaking up into small pieces.

### Brief description of the invention

We have now found that the removability of the gel from the frozen confection core can be improved by including an ice structuring protein in the frozen confection core. Accordingly, in a first aspect the present invention provides a frozen confectionery product comprising a core of a frozen confection, which is at least partially coated with a gel, characterized in that the core of frozen confection comprises an ice structuring protein.
Preferably the ISP is a type III ISP, more preferably the ISP is type III HPLC-12.
The ISP is present in the frozen confection core in an amount of from 0.0001 wt% to 0.05 wt%.
Preferably the gel is an alginate gel.
Preferably the product is a stick product.
In one embodiment, the core is substantially covered by a layer of gel. Preferably scores or notches are present in the gel layer.
In another embodiment, the core is partially covered by pieces of gel. Preferably the gel is arranged as a helical stripe around the core. More preferably there are gaps between the turns of the helical stripe.

### Detailed description of the invention

Unless defined otherwise, all technical and scientific terms used herein have the same meaning as commonly understood by one of ordinary skill in the art (e.g. in frozen food manufacture). Definitions and descriptions of various terms and techniques used in frozen confectionery manufacture are found in "Ice Cream", 6th Edition R.T. Marshall, H.D. Goff and R.W. Hartel, Kluwer Academic / Plenum Publishers, New York 2003 and "The Science of Ice Cream", C.J. Clarke, Royal Society of Chemistry, Cambridge, 2004.
Frozen confections are sweet-tasting fabricated foodstuffs intended for consumption in the frozen state (i.e. under conditions wherein the temperature of the foodstuff is less than 0°C, and preferably under conditions wherein the foodstuff comprises a significant amount of ice). Frozen confections include water ices and fruit ices, which comprise water and one or more of sugars, stabilisers, colours and flavours, but little or no fat or protein (e.g. less than 5 wt% of each, preferably less than 2 wt%). Frozen confections also include ice creams, frozen yoghurts, sorbets and the like.
The frozen confection may be aerated or unaerated. If the frozen confection is aerated, the overrun is preferably at least 20%, more preferably at least 50%. It is preferable that the overrun does not exceed 200%, more preferably the overrun is less than 130%. Overrun is typically produced by intentionally incorporating gas into the product, such as by mechanical agitation. The gas can be any food-grade gas such as air, nitrogen or carbon dioxide. Overrun is measured at atmospheric pressure and is defined by

$$\text{overrun \%} = \frac{\text{density of mix - density of ice cream}}{\text{density of ice cream}} \times 100$$

The frozen confection core may be prepared by any suitable method. The core contains an ice structuring protein (ISP). ISPs can be used at very low concentrations. Typically the ISP is present in an amount of at least 0.0001 wt%, more preferably at least 0.0002 wt%, more preferably still at least 0.0003 wt%, yet more preferably at least 0.0005 wt%; most preferably at least 0.001 wt%; and preferably less than 0.05 wt% ISP; more preferably less than 0.025 wt% ISP; more preferably still less than 0.01 wt% ISP. A preferred range is from about 0.001 to 0.01 wt%. Ice structuring proteins (ISPs) are proteins that can influence the shape and size of the crystals of ice formed during freezing, and inhibit recrystallisation of ice (Clarke et al., 2002, Cryoletters 23: 89-92; Marshall et al., Ice Cream, 6th Edition, ibid.). Many of these proteins were identified originally in organisms that live in sub-zero environments and are thought to protect the organism from the deleterious effects of the formation of ice crystals in the cells of the organism. For this reason many ice structuring proteins are also known as antifreeze proteins (AFPs). In the context of the present invention, an ISP is defined as a protein that has ice recrystallisation inhibitory (RI) activity.

Ice recrystallisation inhibitory activity properties can conveniently be measured by means of a modified splat assay as described in WO00/53029: 2.5 $\mu$l of the solution under investigation in 30% (w/w) sucrose is transferred onto a clean, appropriately labelled, 16 mm circular coverslip. A second coverslip is placed on top of the drop of solution and the sandwich pressed together between finger and thumb. The sandwich is dropped into a bath of hexane held at -80°C in a box of dry ice. When all sandwiches have been prepared, sandwiches are transferred from the -80°C hexane bath to the viewing chamber containing hexane held at -6°C using forceps pre-cooled in the dry ice. Upon transfer to - 6°C, sandwiches can be seen to change from a transparent to an opaque appearance. Images are recorded by video camera and grabbed into an image analysis system (LUCIA, Nikon) using a 20x objective. Images of each splat are recorded at time = 0 and again after 60 minutes. The size of the ice-crystals in both assays is compared by placing the slides within a temperature controlled cryostat cabinet (Bright Instrument Co Ltd, Huntington, UK). Images of the samples are transfered to a Quantimet 520 MC image analysis system (Leica, Cambridge UK) by means of a Sony monochrome CCD videocamera.

Ice crystal sizing can be performed by hand-drawing around the ice-crystals. Typically, at least 100 to 400 crystals are sized for each sample. The ice crystal size is taken as being the longest dimension of the 2D projection of each crystal. The average crystal size is determined as the number average of the individual crystal sizes. The size of the ice-crystals in both assays is compared. If the size at 30-60 minutes is similar or only moderately (less than 10%) increased compared to the size at t=0, and/or the crystal size is less than 20 micrometer, preferably from 5 to 15 micrometer this is an indication of good ice-crystal recrystallisation properties.

Significant ice recrystallisation inhibitory activity can be defined as where a 0.01 wt% solution of the ISP in 30 wt% sucrose, cooled rapidly (at least $\Delta$50°C per minute) to -40°C, heated rapidly (at least $\Delta$50°C per minute) to -6°C and then held at this temperature results in an increase in average ice crystal size over one hour of less than 5 $\mu$m.

ISPs for use according to the present invention can be derived from any source provided they are suitable for inclusion in food products. ISPs have been identified to date in fish, plants, lichen, fungi, micro-organisms and insects. In addition, a number of synthetic ISPs have been described.

Examples of fish ISP materials are AFGP (for example obtainable from Atlantic cod, Greenland cod and Tomcod), Type I ISP (for example obtainable from Winter flounder, Yellowtail flounder, Shorthorn sculpin and Grubby sculpin), Type II ISP (for example obtainable from Sea raven, Smelt and Atlantic herring) and Type III ISP (for example obtainable from Ocean pout, Atlantic wolffish, Radiated shanny, Rock gunnel and Laval's eelpout).

Type III ISPs are particularly preferred. Type III ISPs typically have a molecular weight of from about 6.5 to about 14 kDa, a beta sandwich secondary structure and a globular tertiary structure. A number of genes encoding type III ISPs have been cloned (Davies and Hew, 1990, FASEB J. 4: 2460-2468). A particularly preferred type III ISP is type III HPLC-12 (Accession No. P19614 in the Swiss-Prot protein database).

Lichen AFPs are described in WO99/37673 and WO01/83534.

Examples of plants in which ISPs have been obtained are described in WO98/04699 and WO98/4148 and include garlic-mustard, blue wood aster, spring oat, winter cress, winter canola, Brussels sprout, carrot (GenBank Accession No. CAB69453), Dutchman's breeches, spurge, daylily, winter barley, Virginia waterleaf, narrow-leaved plantain, plantain, speargrass, Kentucky bluegrass, Eastern cottonwood, white oak, winter rye (Sidebottom et al., 2000, Nature 406: 256), bittersweet nightshade, potato, chickweed, dandelion, spring and winter wheat, triticale, periwinkle, violet and grass.

The ISPs can be obtained by extraction from native sources by any suitable process, for example the isolation processes as described in WO98/04699 and WO98/4148.

Alternatively, ISPs can be obtained by the use of recombinant technology. For example host cells, typically micro-organisms or plant cells, may be modified to express ISPs and the ISPs may then be isolated and used in accordance with the present invention. Techniques for introducing nucleic acid constructs encoding ISPs into host cells are well known in the art.

Typically, an appropriate host cell or organism would be transformed by a nucleic acid construct that encodes the desired ISP. The nucleotide sequence coding for the polypeptide can be inserted into a suitable expression vector encoding the necessary elements for transcription and translation and in such a manner that they will be expressed under appropriate conditions (e.g. in proper orientation and correct reading frame and with appropriate targeting and expression sequences). The methods required to construct these expression vectors are well known to those skilled in the art.

A number of expression systems may be used to express the polypeptide coding sequence. These include, but are not limited to, bacteria, fungi (including yeast), insect cell systems, plant cell culture systems and plants all transformed with the appropriate expression vectors. Preferred hosts are those that are considered food grade 'generally regarded as safe' (GRAS).

Suitable fungal species include yeasts such as (but not limited to) those of the genera *Saccharomyces, Kluyveromyces, Pichia, Hansenula, Candida, Schizo saccharomyces* and the like, and filamentous fungal species such as (but not limited to) those of the genera *Aspergillus, Trichoderma, Mucor, Neurospora, Fusarium* and the like. Preferably the species selected is a yeast, most preferably a species of *Saccharomyces* such as *S. cerevisiae.* Where glycosylation of the ISP leads to reduced activity then it is preferred that the host exhibits reduced glycosylation of heterologous proteins.

A wide variety of plants and plant cell systems can also be transformed with the nucleic acid constructs of the desired polypeptides. Examples of plant species include maize, tomato, tobacco, carrots, strawberries, rape seed and sugar beet.

The sequences encoding the ISPs are preferably at least 80% identical at the amino acid level to an ISP identified in nature, more preferably at least 95% or 100% identical. However, persons skilled in the art may make conservative substitutions or other amino acid changes that do not reduce the RI activity of the ISP. For the purpose of the invention these ISPs possessing this high level of identity to an ISP that naturally occurs are also embraced within the term "ISPs".

The core of the frozen confection may be completely covered with a layer of a gel. The product can be produced for example by coating a preformed frozen confection core with a gel layer which is applied by dipping, spraying, or enrobing; or by means of a fill and suck process in a mould wherein a gel mix is filled into a mould, the core sucked out and then refilled with frozen confection. In a preferred embodiment, the core is substantially covered by a layer of gel, and scores or notches are present in the gel layer. The scores / notches allow easy peeling of strips of the gel layer, for example in a similar manner to peeling a banana. The scores / notches may be formed for example by cutting the gel layer after it has been formed, or, when the fill and suck method is used, by using a mould with suitable indentations.

Alternatively, the core may be partially covered by pieces of gel, for example arranged as stripes. In a preferred embodiment, the gel is arranged as one or more helical stripes around the core. Preferably there are gaps between the turns of the helical stripe(s), since we have found that having gaps between stripes aids peeling. Such products can be produced for example by co-extrusion using rotating nozzles as described in EP 0 598 796.

The gel layer is formed from a mix which contains a gelling agent. The gelling agent may be a thermoreversible gelling biopolymer such as gelatine or agar. Alternatively the gelling agent may be a chemically setting gelling biopolymer which derives its gel structure from an interaction between the biopolymer and an appropriate ion such as $Ca^{2+}$. Examples include sodium alginate, iota- carrageenan, kappa- carrageenan and pectin. The gelling agent could also be a synergistic combination of two or more biopolymers that may be individually non-gelling, but on mixing will form a gel or a gel of a higher modulus. Examples include: sodium alginate with pectin, xanthan with locust bean gum, agar with locust bean gum, and kappa carrageenan with locust bean gum. The gelling agent is present in an amount such that the gel is sufficiently strong to for the gel layer to cohere so that it does not break apart too easily during peeling. The gel strength can be increased by increasing the amount of the gelling agent in the mix.

The gel may be formed by lowering the temperature (for thermally setting gelling agents) or by combining two separate mix streams, each of which contains one of the components of a chemically setting gelling agent. For example, the mix may be made in two parts, one containing sodium alginate and the other containing a source of $Ca^{2+}$ ions. When the two mixes are combined in the mould, the alginate reacts with the $Ca^{2+}$ to form the gel.

We have found that the presence of ISP in the core results in better peeling of the gel, in particular it comes away more easily and cleanly, with less breakage of the gel layer during peeling.

The present invention will now be described with reference to the following examples and Figures, wherein

Figure 1 shows a product which does not have ISP in the core as a spiral strip of gel is peeled off.
Figure 2 shows a product according to the invention which has ISP in the core as a spiral strip of gel is peeled off.
Figure 3 shows a comparative example and products according to the invention with a chemically setting gel.
Figure 4 shows a comparative example and products according to the invention with a biopolymer-based gel.

**Example 1**

A conventional tropical fruit flavour water ice mix for the core was prepared, to which ISP was added in an amount of 0.0033 wt%. The ISP was recombinant ocean pout type III HPLC-12 produced in yeast essentially as described in WO97/02343. A conventional strawberry flavour water ice (without ISP) was also prepared. A pineapple flavour gel mix was prepared in two parts, as shown in Table 1. The first part contained sodium alginate and the second part contained calcium chloride.

**Table 1**

| Ingredient (wt%) | First part | Second part |
|---|---|---|
| Liquid sugar | 33.6 | |
| 63 DE glucose syrup (78% solids) | 11.8 | |
| Sodium alginate | 0.8 | |
| Sodium citrate | 0.6 | |
| Colour and flavour | 0.29 | |
| Calcium chloride solution (35%) | | 9.1 |
| Citric acid | | 21 |
| Water | To 100 | To 100 |

The tropical fruit flavour mix, the strawberry flavour mix and the first part of the gel mix were (separately) partially frozen in standard ice cream freezers, to a temperature such that they could be extruded. The second part of the gel mix was combined with the first part in a ratio of 19 : 1 (first part : second part) using dynamic and static mixers immediately on exit from the freezer. This allows the sodium alginate and calcium chloride to react, thereby starting to form the gel. The three streams were then used to form Twister™ type products as follows. The tropical mix was extruded as the core, and the strawberry water ice and pineapple gel and were extruded as helical stripes around the core, using rotating nozzles. The extrudate was cut into pieces of the required length, a stick was inserted into each piece, and the products were then hardened in a blast freezer, wrapped and placed in cold storage.

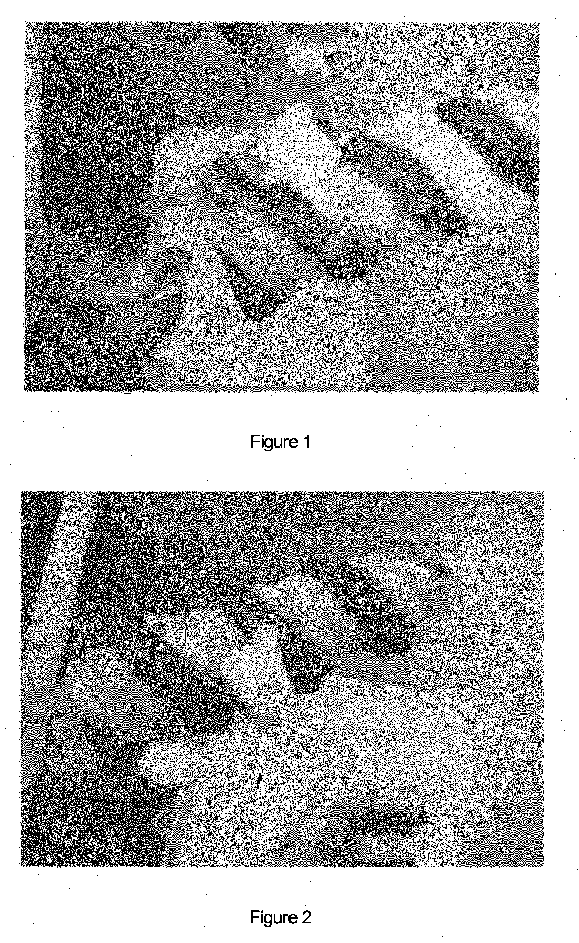

Similar products were produced, but without any ISP in the core. Figure 1 shows a product which does not have ISP in the core as a spiral strip of gel is peeled off. Figure 2 shows a product according to the invention which has ISP in the core as a spiral strip of gel is peeled off.

Figure 1 shows that the spiral gel strip did not peel easily away from the core. Part of the gel strip remained stick to the core. Some of the gel strip could be peeled off, but the force required was such that the gel strip came apart, so that a small piece broke off in the fingers. The peeling properties were therefore not satisfactory. In contrast, Figure 2 shows that for the product according to the invention, a long strip of gel peeled cleanly away from the core, leaving an exposed surface without any of the gel strip remaining stuck to the core. Thus it is apparent that the presence of ISP significantly improves the peelability of the jelly from the core.

**Example 2**

Further examples were made using a core containing no ISP, 0.0005wt% ISP, and 0.001wt% ISP. These cores were coated with a chemically setting gel and a gel containing a synergistic combination of two biopolymers as described below.

A water ice mix for a core was prepared from the ingredients shown in Table 2. The mix was made by combining the dry ingredients and adding them to water at 90°C. The mix was stirred to dissolve the dry ingredients then cooled to about 5°C. From this mix, 3 cores were prepared containing: 0.0005wt% ISP, 0.001wt% ISP and no ISP. The ISP was recombinant ocean pout type III HPLC-12 produced in yeast essentially as described in WO97/02343.

**Table 2**

| Ingredient | wt% |
|---|---|
| Sucrose | 17.00 |
| MD40 | 1.64 |
| Citric acid | 0.15 |
| LBG | 0.10 |
| Guar | 0.10 |
| Water | to 100 |

The chemically setting gel was prepared in two parts, as shown in Table 3. The first part contained sodium alginate and the second part contained calcium chloride. The coating was made by combining the major mix (containing sodium alginate) with the minor mix (containing citric acid and calcium chloride). The major and minor mixes were both made separately by combining all the dry ingredients and adding to water at 90°C. The mixes were stirred to dissolve all the dry ingredients, the mix allowed to cool to about 5°C. Products coated with this gel were made by adding 5 g of the minor mix to 100 grams of the major mix. The combined mix added to a metal mould in a brine bath at -25°C for 30 seconds to form a coating. The un-set mix was then sucked out using a syringe to leave an outer coating. The core mixes were then filled into moulds, a stick inserted and they were allowed to freeze in the brine bath at -25°C. The products were then demoulded and stored at -25°C.

**Table 3**

| Ingredient (wt%) | First part | Second part |
|---|---|---|
| Sucrose | 9.00 | |
| Dextrose | 10.0 | |
| Glucose Syrup (MD40) | 11.5 | |
| Sodium alginate | 1.0 | |
| Pectin | 0.4 | |
| Citric acid | 0.5 | |
| Calcium Chloride | | 0.15 |
| Colour | | 0.1 |
| Water | To 100 | To 100 |

The biopolymer-based gel was prepared from the ingredients shown in Table 4. The mix was made by combining all the dry ingredients and to water at 90°C. The mix was stirred to dissolve all the dry ingredients, a liquid colour was added and the mix allowed to cool to about 65°C. Products coated with this gel were made using the fill and suck technique whereby the coating mix at 65°C was filled into a cylindrical metal mould and frozen in a brine bath at -25°C for 60 seconds to form an outer coating. The mix was then sucked out of the metal mould using a syringe. The core mixes were then filled into the moulds, a stick inserted and they were then allowed to freeze in the brine bath at -25°C. The products were then demoulded and stored at -25°C.

**Table 4**

| Ingredient | wt% |
|---|---|
| Sucrose | 9.00 |
| Dextrose | 10.00 |
| Glucose Syrup (MD40) | 11.50 |
| LBG | 0.35 |
| Carrageenan | 1.00 |
| Citric acid | 0.28 |
| Sodium Citrate | 0.50 |
| Colour | 0.10 |
| Water | 67.28 |

By the process described above, 3 different core types coated with the two gel types were produced, yielding 6 different products as shown in Table 5.

**Table 5**

| | Core | | |
|---|---|---|---|
| | **No ISP** | **0.0005wt% ISP** | **0.001 wt% ISP** |
| **Coating** | **Chemically setting** | **Chemically setting** | **Chemically setting** |
| | **Biopolymer - based** | **Biopolymer - based** | **Biopolymer - based** |

The products were stored for 24 hours at -18°C. A sharp knife was then used to make a spiral cut through the gel coating on the products.

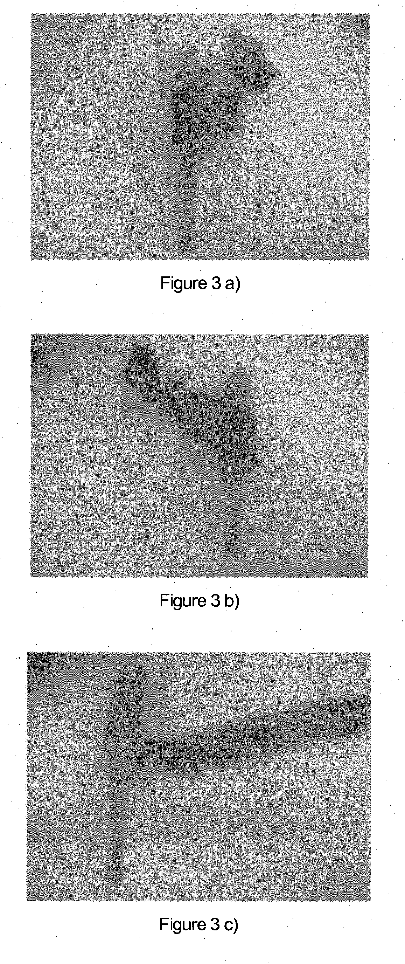

Figure 3 shows the products coated with the chemically setting gel as follows: Figure 3 a) = Core with no ISP, Figure 3 b) = Core with 0.0005wt%, Figure 3 a) = Core with 0.001wt% ISP. As shown in the figures, the gel could not be removed easily from the core that contained no ISP. In contrast, even the very low level of ISP in the core of Figure 3 b) resulted in a product from which the gel could easily be removed. The same was observed for the slightly higher level of ISP in the core of Figure 3 c).

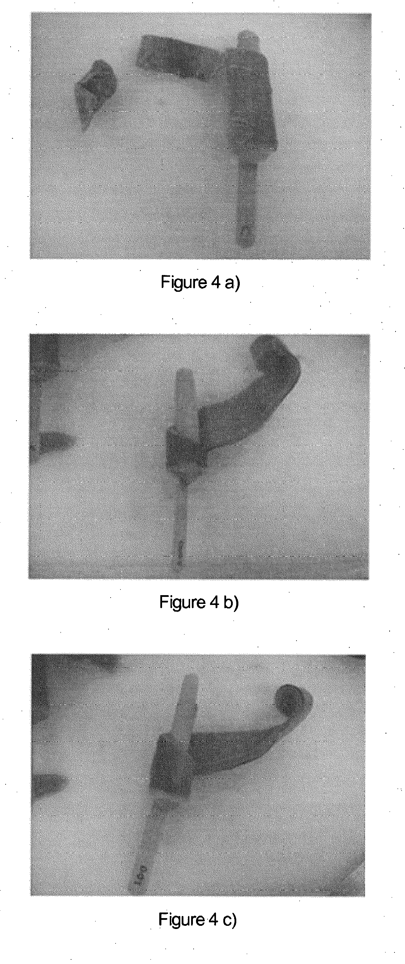

Figure 4 shows the products coated with the biopolymer-based gel as follows: Figure 4 a) = Core with no ISP, Figure 4 b) = Core with 0.0005wt%, Figure 4 a) = Core with 0.001wt% ISP. It can again be seen from the photos that the gel could not be removed from the core that had no ISP whereas even the very low level of ISP in the core of Figure 4 b) resulted in a product from which the gel could easily be removed. The same was observed for the slightly higher level of ISP in the core of Figure 4 c).

The foregoing examples therefore demonstrate that that the presence of even very low levels of ISP in the core increase the ability of the outer gelled layer to be peeled from the core. This is the case for a wide variety of different gel types.

**Claims**

1. A frozen confectionery product comprising a core of a frozen confection, which is at least partially coated with a gel, **characterized in that** the core of frozen confection comprises an ice structuring protein in an amount of from 0.0001 wt% to 0.05 wt%.

2. A frozen confectionery product according to claim 1 wherein the ISP is a type III ISP.

3. A frozen confectionery product according to claim 2 wherein the ISP is type III HPLC-12.

4. A frozen confectionery product according to any of claims 1 to 3 wherein the gel is an alginate gel.

5. A frozen confectionery product according to any of claims 1 to 4 wherein the product is a stick product.

6. A frozen confectionery product according to any of claims 1 to 5 wherein the core is substantially covered by a layer of gel.

7. A frozen confectionery product according to claim 6 wherein scores or notches are present in the gel layer.

8. A frozen confectionery product according to any of claims 1 to 5 wherein the core is partially covered by pieces of gel.

9. A frozen confectionery product according to claim 8 wherein the gel is arranged as a helical stripe around the core.

10. A frozen confectionery product according to claim 8 wherein there are gaps between the turns of the helical stripe.

**Patentansprüche**

1. Gefrorenes Konfektprodukt mit einem Kern aus gefrorenem Konfekt, der wenigstens teilweise mit einem Gel überzogen ist, **dadurch gekennzeichnet, dass** der Kern aus gefrorenem Konfekt ein Eisstrukturierungsprotein (ISP) in einer Menge von 0,0001 Gew.-% bis 0,05 Gew.-% umfasst.

**2.** Gefrorenes Konfektprodukt nach Anspruch 1, wobei das ISP ein Typ-III-ISP ist.

**3.** Gefrorenes Konfektprodukt nach Anspruch 2, wobei das ISP ein Typ-III-HPLC-12 ist.

**4.** Gefrorenes Konfektprodukt nach einem der Ansprüche 1 bis 3, wobei das Gel ein Alginatgel ist.

**5.** Gefrorenes Konfektprodukt nach einem der Ansprüche 1 bis 4, wobei das Produkt ein Stielprodukt ist.

**6.** Gefrorenes Konfektprodukt nach einem der Ansprüche 1 bis 5, wobei der Kern im Wesentlichen von einer Gelschicht bedeckt ist.

**7.** Gefrorenes Konfektprodukt nach Anspruch 6, wobei in der Gelschicht Kerben oder Rillen vorhanden sind.

**8.** Gefrorenes Konfektprodukt nach einem der Ansprüche 1 bis 5, wobei der Kern teilweise von Gelstücken bedeckt ist.

**9.** Gefrorenes Konfektprodukt nach Anspruch 8, wobei das Gel als ein schraubenlinienförmiger Streifen um den Kern angeordnet ist.

**10.** Gefrorenes Konfektprodukt nach Anspruch 8, wobei zwischen den Windungen des schraubenlinienförmigen Streifens Lücken vorhanden sind.


**Revendications**

**1.** Produit de confiserie glacée comprenant un noyau d'une confiserie glacée, lequel est au moins partiellement enrobé avec un gel, **caractérisé en ce que** le noyau de confiserie glacée comprend une protéine structurante de glace dans une quantité de 0,0001 % en poids à 0,05 % en poids.

**2.** Produit de confiserie glacée selon la revendication 1, dans lequel l'ISP est un ISP de type III.

**3.** Produit de confiserie glacée selon la revendication 2, dans lequel l'ISP est HPLC-12 de type III.

**4.** Produit de confiserie glacée selon l'une quelconque des revendications 1 à 3, dans lequel le gel est un gel d'alginate.

**5.** Produit de confiserie glacée selon l'une quelconque des revendications 1 à 4, dans lequel le produit est un produit en stick.

**6.** Produit de confiserie glacée selon l'une quelconque des revendications 1 à 5, dans lequel le noyau est pratiquement recouvert par une couche de gel.

**7.** Produit de confiserie glacée selon la revendication 6, dans lequel des trous ou des entailles sont présents dans la couche de gel.

**8.** Produit de confiserie glacée selon l'une quelconque des revendications 1 à 5, dans lequel le noyau est partiellement recouvert par des morceaux de gel.

**9.** Produit de confiserie glacée selon la revendication 8, dans lequel le gel est disposé comme une bande hélicoïdale autour du noyau.

**10.** Produit de confiserie glacée selon la revendication 8, dans lequel il existe des espaces entre les tours de la bande hélicoïdale.

Figure 1

Figure 2

Figure 3 a)

Figure 3 b)

Figure 3 c)

Figure 4 a)

Figure 4 b)

Figure 4 c)

## REFERENCES CITED IN THE DESCRIPTION

**Patent documents cited in the description**

- WO 0130175 A
- US 3752678 A
- CN 101120714 A
- WO 0053029 A
- WO 9937673 A
- WO 0183534 A
- WO 9804699 A
- WO 984148 A
- EP 0598796 A
- WO 9702343 A

**Non-patent literature cited in the description**

- Ice Cream. Kluwer Academic / Plenum Publishers, 2003
- **C.J. CLARKE.** The Science of Ice Cream. Royal Society of Chemistry, 2004
- **CLARKE et al.** *Cryoletters,* 2002, vol. 23, 89-92
- **MARSHALL et al.** Ice Cream
- **DAVIES ; HEW.** *FASEB J.,* 1990, vol. 4, 2460-2468
- **SIDEBOTTOM et al.** *Nature,* 2000, vol. 406, 256